(19) Europäisches Patentamt
European Patent Office
Office européen des brevets

(11) Publication number: 0 153 911
A1

# (12) EUROPEAN PATENT APPLICATION

(21) Application number: 85850028.3

(22) Date of filing: 29.01.85

(51) Int. Cl.$^4$: B 01 J 35/00
B 01 J 37/02, B 01 D 53/36

(30) Priority: 30.01.84 SE 8400426
30.01.84 SE 8400427
30.05.84 SE 8402916

(43) Date of publication of application:
04.09.85 Bulletin 85/36

(84) Designated Contracting States:
BE DE FR GB IT LU NL SE

(71) Applicant: EKA AB

S-445 00 Surte(SE)

(72) Inventor: Gottberg, Lars Ingemar
Taltrastvägen 16
S-430 41 Kullavik(SE)

(72) Inventor: Järas, Sven Gunnar
Krongangen 9
S-442 39 Kungälv(SE)

(72) Inventor: Otterstedt, Jan-Erik Anders
Asbacken 51
S-445 00 Surte(SE)

(72) Inventor: Baeza Calzadilla, José Aurelio
Skogsgläntan 70
S-435 00 Mölnlycke(SE)

(72) Inventor: Dahlqvist, Per-Arne
Trätte Hedra P1 4190
S-440 92 Svanesund(SE)

(72) Inventor: Carlö, Hakan Arne
c/o Krantz Redbergsvägen 17 A, 3 tr
S-416 65 Göteborg(SE)

(72) Inventor: Askengren, Ann-Kristin, Elisabeth
Asbräcka, PL 1162
S-463 00 Lilla Edet(SE)

(72) Inventor: Rydström, Annika
Styrlinegatan 5
S-431 36 Mölndal(SE)

(74) Representative: Wallin, Bo-Göran et al,
AWAPATENT AB Box 5117
S-200 71 Malmö(SE)

## (54) Catalytic exhaust emission control device and a method of making it.

(57) A catalytic exhaust emission control device has a support which consists of a high-temperature resistant material and on its surfaces contacting the exhaust gases has a coating containing a catalytically active material. The coating has a surface area of at least 40 $m^2/g$, preferably at least 75 $m^2/g$, and an average pore diameter of at least 100 Å, at least 75% of the surface area being present in pores having a diameter of above 100 Å. The coating consists of aggregate particles having a coherent three-dimensional network structure and/or of colloidal particles, the catalytically active material being carried by these aggregate particles and/or colloidal particles. In the making of the catalytic exhaust emission control device, the catalytically active material or precursor thereof is concentrated in the coating of the catalyst support. This concentration may be achieved in that the aggregate particles and/or the colloidal particles by a sol or suspension technique or an emulsion technique are provided with a surface coating of the catalytically active material or a precursor thereof. In this manner, the catalytic exhaust emission control device will have a very large accessible surface of catalytically active material per unit of weight.

./...

EP 0 153 911 A1

Fig.1

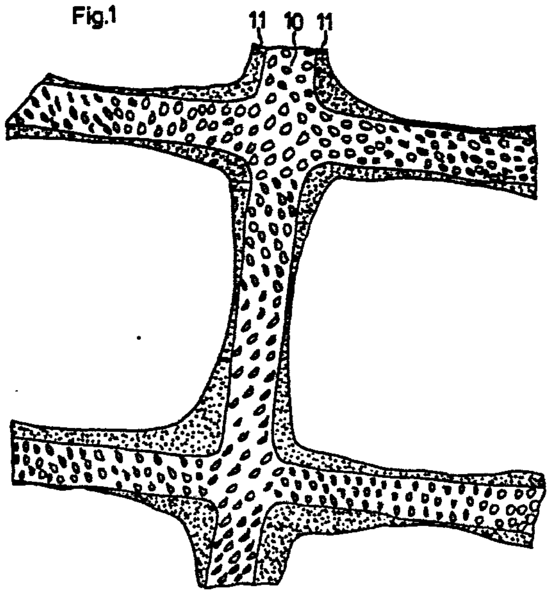

# CATALYTIC EXHAUST EMISSION CONTROL DEVICE AND A METHOD OF MAKING IT

The present invention relates to a catalytic exhaust emission control device and a method of making it.

The background of the invention is that the environmental authorities in many countries are putting heavy pressure on the industry to make it reduce the emissions of polluting substances. It has become necessary, for the car industry in particular, to take measures for reducing the emissions from motor vehicles. To this end, the car industry has tried two approaches to comply with the emission limits, one by engine modifications and the other by using so-called catalytic exhaust emission control devices which bring about a chemical conversion of the exhaust gases. The most successful solution for the catalytic exhaust emission control devices has involved a so-called three-way catalyst which is capable of oxidizing carbon monoxide and uncombusted hydrocarbons and of reducing nitrogen oxides. This solution has however also necessitated engine modifications since a catalyst of this type has its best performance in the range of the stoichometric air/fuel ratio.

A catalyst for catalytic exhaust emission control devices generally consists of catalytically active metals which are fixed on a carrier material which, in turn, is applied to some type of filter through which the exhaust gases must pass on their way from the engine. In this context, a honeycomb-like structure composed of a ceramic material has often been used as filter or support for the catalyst per se. Other methods have involved the use of separate spheres or bodies which have been coated on their surfaces with a catalytically active material and thereafter been enclosed in some type of container which is mounted in the exhaust pipe. Both the monolithic bodies of the honeycomb type and the

separate ceramic bodies generally have been coated with an aluminium oxide containing precious metals, mostly platinum, acting as catalytically active material.

One example of a known catalyst for catalytic exhaust emission control is disclosed in SE patent application 7808434-0. This prior art catalytic exhaust emission control device as well as other prior art catalytic exhaust emission devices suffer from a number of drawbacks which primarily imply that it has not been possible to use the supplied catalytically active material in a sufficiently effective way. It is believed that this depends on the fact that the surface coating which is applied to the support of the exhaust emission control device does not have an optimal structure and that the catalytically active material when being supplied is allowed to penetrate not only into the coating but also into the support itself where the catalytically active material supplied will not come into contact with the exhaust gases. One object of the present invention therefore is to overcome these drawbacks and achieve an exhaust emission control device in which the catalytically active material supplied is used more efficiently. Another object of the invention is to ensure a particularly efficient contact between the exhaust gases and the catalytically active material. Yet another object of the invention is to achieve a method of making a catalytic exhaust emission control device having such properties.

The chemical reactions which are required in connection with the catalytic purification of exhaust gases from internal combustion engines of the petrol and diesel types, involve combustion both of hydrocarbons and carbon monoxide produced by incomplete combustion, and of hydrocarbons in the form of uncombusted but vaporized fuel, as well as hydrogen gas. The purification process should also involve the reduction of certain compounds, e.g. the oxides of nitrogen which are often collectively referred to as $NO_x$, oxygen and water vapour.

Typical reactions which a catalytic exhaust emission control device must be able to promote are the following ones:

$2CO + O_2 \longrightarrow 2CO_2$ ........................ 1

$2CO + 2NO \longrightarrow 2CO_2 + N_2$ .................. 2

$X_xH_y + (2x + \frac{y}{2})\ NO \rightarrow CO_2 + (\frac{y}{2})\ H_2O + (x + \frac{y}{4})\ N_2$ .. 3

$C_xH_y + (x + \frac{y}{4})\ O_2 \longrightarrow x\ CO_2 + (\frac{y}{2})\ H_2O$ ............. 4

The technique on which a so-called three-way catalyst is based has been described in Kemisk Tidskrift (Chemical Journal, published in Sweden) No. 2/1984. As appears from this article, the catalyst has a so-called operational window or λ-window within which efficient purification of all types of harmful substances is obtained. The technique hitherto used for making three-way catalysts however means that the catalysts will have a low efficiency below about 300°C, which has entailed that the emissions from the engines during the heating-up time up to the so-called ignition temperature (at which an exothermic reaction occurs) constitute the major part of the total emission quantity. Another drawback inherent in the the known three-way catalysts is that these commercial catalysts are very sensitive to poisoning by various components in the fuel, e.g. lead, phosphorus and sulphur, whereby the life of the catalyst may be considerably shortened when using fuels containing such impurities. However, the composition of the fuel varies, and in the future the admixture of alcohols, such as methanol or ethanol, and ketones, to the fuel may also be contemplated. In such a case, increased emissions of aldehydes may occur when using the present commercial catalysts.

One object of the present invention therefore is to provide a three-way catalyst which has an extended stoichometric window with λ-values of below 1.0. Thus, the invention aims at producing a catalyst or catalytic exhaust emission control device which has a considerably

lower ignition temperature in that the catalyst has been designed with a substantial activity also far below 300°C and with an increased ability to oxidize alcohols. A further object of the invention is to provide a novel method of applying the catalytically active substance to a novel type of carrier so as to obtain improved resistance to such impurities as lead, phosphorus and sulphur, and also to ensure an extended life and to make it possible to use a smaller amount of precious metals than before.

This and other objects of the invention are achieved by means of a catalytic exhaust emission control device which has a support consisting of high-temperature resistant material and which, on it surfaces contacting the exhaust gases, has a coating which contains a catalytically active material. The coating has a surface area of at least 40 $m^2/g$, preferably at least 75 $m^2/g$, and an average pore diameter of at least 100 Å, at least 75% of the surface area being present in pores having a diameter exceeding 100 Å. The coating consists either of aggregate particles with a coherent three-dimensional network-structure and/or of colloidal particles or aggregates thereof. The catalytically active material in a catalytic exhaust emission control device according to the invention is concentrated in said coating. Presently, the best use of the catalyst material is considered to be achieved if the catalytically active material or a precursor thereof is applied to the aggregate particles and/or the colloidal particles and, hence, are supported thereby. In the production of the catalytic exhaust emission control device according to the invention, the concentration of the catalytically active material to the coating is achieved by first wetting the support and the coating with a vaporable or volatile liquid which is thereafter vaporized off the coating but is allowed to remain in the support, whereupon the coating is impregnated with a liquid which contains the catalytically

active material or a precursor thereof. Another possibility of concentrating the catalytically active material in the coating is to deposit the catalytically active material or a precursor thereof as a surface coating on the aggregate particles and/or the particles of colloidal size before these are used for forming the coating on the support.

When the support is in the form of a monolithic body of e.g. honeycomb structure, the support may suitably consist of such materials as zircon-mullite, mullite, $\alpha$-$Al_2O_3$, sillimanite, magnesium silicates, kaolin clays, zircon, petalite, spodumen, cordierite and most aluminium silicates. One example of a suitable support is a cordierite support of honeycomb structure which is available from Corning Glass Works, USA, and the Japanese company NGK.

If, on the other hand, the support is made up of spheres or other bodies, these bodies may consist of porous silica, e.g. a product which is available under the trademark SILOCEL; granular charcoal; $\alpha$- or $\gamma$-$Al_2O_3$ in the form of granules or pellets; natural or synthetic aluminium silicates; magnesium oxide, diatomaceous earth, bauxite, titanium dioxide, zirconium dioxide, limestone, magnesium silicate, silicon carbide and active or inactive carbons. These materials may exist as regularly or irregularly shaped particles, e.g. capillary tubes, extrudates, rods, spheres, fragmentary pieces or pebbles etc. These bodies then serve as a support for the catalyst carrier proper and the catalytic material. In known catalysts, this carrier for the catalytic material has often been applied as a so-called washcoat of aluminium oxide or any other high-temperature resistant material. In general, the active substances have been precious metals, such as platinum, palladium and rhodium in a total amount of about 1-2 g/l.

According to the present invention, the coating which is to be applied to the support and which should

contain the catalytically active material should have a surface area of at least 40 $m^2/g$, preferably at least 75 $m^2/g$, and an average pore diameter of at least 100 Å, at least 75% of the surface area being present in pores having a diameter exceeding 100 Å. To obtain these properties, the coating may according to a preferred embodiment of the invention consist of aggregate particles with a coherent three-dimensional network structure of mineral particles having a fibrous or strip-shaped structure and a diameter of at least 100 Å and an appropriate mechanical, thermal and hydrothermal stability. The fibrous or strip-shaped mineral particles may here advantageously consist of attapulgite, halloysite, sepiolite and chrysotile, used separately or mixed with each other. Another possibility of giving the coating the above-mentioned properties is to make it from solid high-temperature resistant particles of colloidal size or of aggregates of such particles. These high-temperature resistant particles may then have a surface area of at least 1 $m^2/g$, preferably 50-1000 $m^2/g$. The particles may for instance be in the form of a liquid-borne sol or suspension and may then be deposited on the surface of the support, this giving a substantial increase of the activity of the resulting catalyst mass or body in that the accessible surface area of the carrier material and the catalytically active substance can be increased 2-3 times as compared with the case where the surface coating of an active material is deposited directly on the surface of the support. If, additionally, use is made of such a liquid-borne sol or suspension for coating the surface of high-temperature resistant aggregate particles forming the coating and having a coherent three-dimensional network structure, a considerably improved accessible surface area of catalytically active material is obtained.

If, in connection with the present invention, it is desirable to use a coating in the form of high-temperature

resistant aggregate particles with a coherent three-dimensional network structure of fibrous or strip-shaped particles, it is contemplated as a first stage to prepare an extremely will-dispersed slurry of industrial minerals of a fibrous or strip-shaped structure, in particular aluminium silicates or magnesium silicates in water. In this context, "extremely well-dispersed slurries" here means that the mineral fibres or strips should be suspended separately in the slurry and, thus, preferably not form any aggregates at all. Examples of aluminium silicates of a fibrous or strip-shaped structure are attapulgite, sepiolite and halloysite, and an example of fibrous or strip-shaped magnesium silicates is chrysotile.

In order that the fibrous or strip-shaped mineral particles should form extremely well-dispersed slurries of a high dry content, use is made of dispersing agents, such as water glass, aluminium hydroxy chloride, polyphosphates etc.

Within the scope of the invention it is also contemplated to produce a coating which is formed of mixtures of different types of fibrous or strip-shaped mineral particles. Additionally, it is also contemplated within the scope of the invention to provide a coating which in the resulting network structure of fibrous or strip-shaped mineral particles contains incorporated particles, e.g. spray-dried particles, of conventional aluminium oxide or zeolite.

In order to obtain a three-dimensional network structure having the desired properties, the fibrous or strip-shaped mineral particles can be modified prior to the production of the three-dimensional network structure. Such a modification may serve to increase the diameter of the fibres so as to increase the average pore size of the resulting network structure or may serve to precipitate catalytically active substances on the surface of the mineral particles. The supply of the catalytically active substances may however also be carried out after

the aimed-at network structure has been produced and the mineral particles have been deposited on the support. The supply of the catalytically active substance may be effected e.g. by impregnation with precious metals, such as platinum, palladium etc.

In order safely to achieve the required high degree of dispersion of the slurry before it is spray-dried to particles which may thereafter be used to form the coating on the support, use should be made of a dispersing agent. In some cases, it is desirable to avoid sodium in the catalyst. Use may then be made of such sodium-free dispersing agents as aluminium hydroxy chloride, tetramethylammonium silicate, tetraethanol ammonium hydroxide, ammonium citrate, ammonium tartrate, ammonium glycolate etc, all of which are excellent dispersing agents for aluminium silicates and magnesium silicates having a fibrous or strip-shaped structure, such as attapulgite, sepiolite, halloysite, chrysotile etc.

When traditionally depositing the catalytically active substance, e.g. precious metals such as platinum, on the support or catalyst carrier of a catalytic exhaust emission control device, the support or carrier has usually been impregnated with a solution of e.g. a platinum salt. The salt has thereafter been reduced to metallic form by using a suitable reducing agent. This procedure has often implied unnecessary waste of the catalytically active substance. Such waste of material is obviated in the present invention in either of two ways. The first way consists in first forming the coating on the support of the catalyst and thereafter impregnating the support and its coating with a volatile liquid, whereupon the volatile liquid is partly vaporized off the portion of the catalyst carrier forming the coating. The thus dried coating is thereafter impregnated with a solution of e.g. a soluble precious metal salt in a conventional manner, whereupon the salt is reduced to metallic form. After the reduction, the catalyst is dried, thereby also

removing the volatile liquid from the support by evaporation. By this operational technique, i.e. first impregnating the entire support with its coating and thereafter drying the coating and finally impregnating the coating with a solution of the catalytically active material or a precursor thereof, the catalytically active material will thus be concentrated in those areas of the catalytic exhaust emission control device which are actually coming into contact with the exhaust gases.

Another technique for concentrating the catalytically active material in the coating on the support is to apply the catalytically active material or precursor thereof to the particles or aggregates from which the coating is subsequently formed.

By both these methods it is possible to overcome the problem encountered in present-day techniques, i.e. an unnecessary waste of material. Hence, the invention makes it easy to keep the weight quantity of the catalytically active material low in relation to the extent of the accessible catalytically active surface.

In a highly preferred embodiment of the invention, use is therefore made of high-temperature resistant particles of colloidal size or aggregates of such particles, these particles being provided with a surface coating of the catalytically active substance or a precursor thereof. Hence, it is possible to achieve a catalyst mass with a coating of solid sol particles which, in turn, have a surface coating of the catalytically active substance. The catalytic material will thus be concentrated in the surface of the colloidal particles, such that only a small portion of the total catalyst mass of the catalytic exhaust emission control device consists of catalytically active material, while yet having a catalyst of high efficiency.

One possibility of depositing the catalytically active material on sol or suspension particles of colloidal size is first to prepare a liquid-borne sol or

suspension of carrier particles having a surface area accessible to the liquid of at least 1 $m^2/g$, preferably at least 50-1000 $m^2/g$, and thereafter dissolve in this sol or suspension a soluble metal compound which is thereafter precipitated as a metal or a sparingly soluble metal compound on the surface of the carrier particles. In a method for carrying out this aspect of the invention, it is thus possible to dissolve a soluble compound of one component (anionic or cationic) of the sparingly soluble metal compound in a very low concentration in a liquid-borne sol or colloidal suspension of carrier particles, whereupon the other component of the sparingly soluble metal compound is supplied at a supply rate which allows preferential adsorption or attraction of the precipitating sparingly soluble compound on the particles instead of an excess of the limit of solubility of the compound in the liquid phase of the sol or suspension and, hence, without the formation of crystal nuclei of the sparingly soluble metal compound therein. In this case, the coating technique is based on the idea of first preparing a liquid-borne sol or suspension of carrier particles having a surface area accessible to the liquid of at least 1 $m^2/g$ and thereafter dissolving in this sol or suspension a soluble metal compound which is thereafter precipitated as metal or a sparingly soluble metal compound on the carrier particles. When a sparingly soluble compound is deposited on the colloidal particles, the components of the sparingly soluble compound are thereafter supplied in such a manner that the precipitation occurs on the surface of the colloidal particles. This may be effected by simultaneously supplying the components under vigorous agitation of the sol or suspension, at different points or supplying them successively after each other, such that one component is attracted by the particle surface prior to or in connection with the reaction with the other component or such that the newly formed compound is preferentially attracted by the

colloidal particles without major aggregates of the insoluble compound having time to form. In this context, "major aggregates" here refers to so-called oligomeric or more polymeric aggregates. The addition of the components must be carried out under conditions favouring colloidal stability. Thus, the electrolyte content in the solution should not attain a level which destabilizes, coagulates, the colloidal particles, i.e. not exceed a critical content which is dependent on the surface area of the colloidal particles and the valency of the electrolyte. The pH value also is of great importance for the stability of the colloids and so, the pH should be maintained at a value which counteracts destabilization of the colloid concerned. The same considerations should be taken in respect of temperature.

The reason for the established effect with this technique of coating colloidal particles with a coating of metal or a sparingly soluble metal compound has however not been quite elucidated. It might depend on adsorption or attraction or on the fact that the low concentrations cause such a slow formation of crystal nuclei that the individual crystal nuclei have a shorter distance up to the surface of the sol or suspension particles than to each other, such that they are attracted to the surface of the particles and not to each other.

A surface coating of metal on the sol or suspension particles may also be achieved in that the metal is first precipitated on the particles as a reducible sparingly soluble metal compound which is thereafter reduced to metal. Alternatively, a soluble compound of the desired metal may be dissolved in the sol or suspension in order that this should adsorb or attract the metal-containing ion or molecule of the compound, whereupon these ions or molecules are directly reduced to metal.

In an embodiment of this aspect of the invention, a soluble compound of the desired metal or metal compound (i.e. a precursor of the desired final catalytically

active substance) thus is dissolved in the sol or suspension, the soluble compound being added in such an amount that substantially all metal ions or molecules in the solution can be adsorbed or attracted by the surface of the sol or suspension particles by surface chemical forces, such as surface charge, van der Waals' forces, dispersion forces etc. A very slow addition is thereafter effected of a substance which precipitates the desired catalytically active substance or a precursor thereof directly on the surface of the sol or suspension particles by reacting with the ions or molecules adsorbed or attracted by it.

The production of the coated sol or suspension particles may be effected in several stages, i.e. if the particles initially lack a surface chemical nature suitable for deposition of the final catalytically active substance or its precursor, it is possible similarly to build up several layers to change the surface charge of the initial sol or suspension particles from negative to positive and vice versa. The same technique can be used if it is desirable to deposit a mixture of catalytically active substances on the particles.

According to this aspect of the invention, the sol or suspension particles will thus serve as carriers for the catalytically active substance or substances. To make it possible to apply a coating to the surface of the sol or suspension particles without the appearance of a separate precipitation of the catalytically active substance in the liquid phase (aqueous phase) of the sol or suspension, it is necessary 1) that the carrier particles (sol or suspension particles) are monodisperse and have a large available surface area such that the carrier surface per unit volume of the sol or suspension is large, and 2) that the precipitation of the desired substance (or precursor thereof) occur so slowly that the resulting substance will have time to diffuse up to the carrier surface and be deposited thereon without excess of the limit of solubily of the substance

in the liquid phase of the sol or suspension and without any spontaneous formation of crystal nuclei therein.

The simplest way of carrying out this aspect of the invention is using water as the liquid medium in which the coating of the surface of the sol or suspension particles is brought about. However, other liquid media are usable provided the contemplated substances are soluble in the liquid media and can be precipitated therefrom with the technique here described. The carrier in the form of a sol or a suspension must be of a very low solubility in the liquid phase used, usually and preferably water, or at least have a very low dissolution rate in the liquid phase. Examples of such substances are polyvalent metal oxides such as $SiO_2$, $Al_2O_3$, $ZrO_2$, $Fe_2O_3$ etc, but also such minerals, e.g. oxides, silicates and aluminium silicates, as exist in colloidal form. Examples of such minerals are kaolin, attapulgite, bentonite, volcanic ash, dispersed asbestos etc.

In order that a sol or a suspension should be usable in the invention, the particles of the sol should have a large surface area, calculated as the accessible surface, since although particles which are large and have a spongy structure, have a large internal surface, this surface is not always accessible to the solution from which the coating is precipitated or deposited. The required size of the accessible surface is determined by a number of different factors of which the surface chemical effect of the surface is one of the most important. The surface accessible to the solution should be at least 1 $m^2/g$ to achieve practical production rates. Surface areas of above 50 $m^2/g$ are preferred, a practical range being 50-1000 $m^2/g$. As regards silicic acid sols as carriers for the deposited catalytically active substances, sols having a surface area of 300-700 $m^2/g$, which corresponds to a particle size of about 4-9 nm, can be used to advantage.

As stated above, it is not necessary that the particles of the initial sol or suspension have a surface

charge of the polarity which is necessary for depositing the desired final catalytically active substance. Thus, silicic acid sols (having a negative surface charge) may first be modified by a polyaluminium compound, e.g. from basic aluminium chloride, to have a positive surface charge if required for depositing or precipitating the desired catalytically active substance or its precursor. In some cases, the polarity can also be affected by the pHΔ of the liquid medium. As regards e.g. a silicic acid sol, the surface of the sol is approximately neutral at a pH of 2-3 and the negative charge increases with increasing pH. Depending on the system, it is thus possible to use the pH as an aid for adjusting the surface charge. Another way of increasing the negative charge of a silicic acid particle is to react aluminium with the surface of the silicic acid particles with formation of negative $SiAl_4^{-1}$ sites. Such a modified acidic acid has a considerable negative charge also at acid pH values, as opposed to unmodified silicic acid sols. Whether adsorption or attraction is obtained by the surface charge or by any other mechanism, it is however necessary that the carrier particles have a capacity or are first made capable of adsorbing or attracting one or more of the components of the desired coating (e.g. by ensuring that the surface of the carrier particles has a suitable surface charge), such that it is possible by a slow controlled precipiation rate to direct the precipitation to the surface of the sol particles.

Another requirement regarding the carrier, i.e. the sol or suspension particles, is that they have a low dissolution rate or are insoluble under the deposition or precipitation conditions since it would otherwise be difficult to deposit or precipitate other substances on the surface of the particles.

The conditions for the deposition must be such that the sol or suspension particles (or modified particles) of the carrier material have a sufficiently large total

surface for a surface chemical adsorption or attraction of substantially all ions or molecules which are present in the solution and should be included in the subsequently precipitated or deposited substance. The other ion(s) or molecule(s) to be combined with the ions or molecules adsorbed or attracted to the sol or suspension particles, must thereafter be supplied at such a low rate that the chemical compound or compounds which should be precipitated or deposited will have time to diffuse up to the surface of the particles and be deposited on it without the limit of solubility being exceeded and without the occurrence of a spontaneous formation of crystal nuclei in the solution.

The rate at which a coating can be built up on the colloidal carrier particles without the formation of any new free crystal nuclei in the solution is dependent upon the crystalinity of the coating and varies over a very wide range depending on what substances are combined to form the coating.

When it is desired that the surface of the colloidal particles should comprise a catalytically active metal, e.g. Pt or Pd, these catalytically active surfaces may be produced by reducing a metal compound together with the colloid, such that the metal is directly deposited on the surface of the colloidal particles. Another way of achieving this is to first precipitate an insoluble compound of the metal on the surface of the particles and thereafter convert this compound to a catalytically active form of the metal.

The liquid-borne sol or suspension of surface-coated sol or suspension particles can be used for producing the catalyst material by spray-drying. For producing a catalyst, it is highly advantageous to coat the surface of a catalyst support with said surface-coated solid sol or suspension particles. This gives an advantageous increase of the activity of the resulting catalyst in that the accessible surface area of catalytically active

substance will thus be increased 2-3 times as compared with the case where the surface coating of active material is deposited directly on the surface of the catalyst support instead of the surface of the sol particles.

Another possibility of applying the catalytically active substance to the coating of the support is to deposit very small particles of the catalytically active substance or substances according to a microemulsion technique which is described in EP-B1-0055257. According to this technique, a microemulsion is first prepared in which small particles of the contemplated active catalyst material, e.g. small particles of cobalt and molybdenum sulphide, are suspended. This microemulsion is thereafter mixed with a slurry of the fibrous or strip-shaped mineral material, these fibrous or strip-shaped mineral particles being coated with a monolayer of small particles of cobalt and molybdenum sulphide. Similarly, it is possible to first prepare a microemulsion in which small particles of metallic platinum are suspended.

The application of the coating to the catalyst support may suitably be effected according to the washcoat method or the slip casting method in which a liquid-borne suspension of particles is supplied to a dry support of porous structure, such that the support will absorb liquid from the suspension. The particles of the suspension will then at the same time adhere to the surfaces of the support, whether these are situated on the outer side of the support or within the channels of the support if the support is of honeycomb structure. This coating technique is conventional. If the particles of the suspension have already been provided with a surface coating of their own of a catalytically active material, the catalytic exhaust emission control device is finished after this application of washcoat. If, on the other hand, the coating has first been formed and given a surface area of at least 40 $m^2/g$, preferably at least 75 $m^2/g$, and an average pore diameter of at least 100 Å, at least 75% of

the surface area being present in pores having a diameter of above 100 Å, the addition of the catalytically active substance must be carried out according to the above-mentioned technique in which the entire support and the coating thereon are first impregnated with a vaporable liquid which is thereafter partly removed by vaporization from the coating which is then impregnated with a solution of the catalytically active substance or a precursor thereof.

In the accompanying drawings,

Fig. 1 is a cross-section of a car exhaust emission catalyst having a honeycomb-like support whose inner and outer surfaces have been coated with a washcoat;

Fig. 2 is a diagram showing the distribution of catalytically active platinum in a wall portion of a conventional car exhaust emission catalyst;

Fig. 3 is a similar diagram showing a car exhaust emission catalyst according to subsequent Example 9, and

Fig. 4 is a diagram which shows in more detail the distribution of catalytically active platinum in the washcoat of the car exhaust emission catalyst according to subsequent Example 9.

The invention will now be described in greater detail with reference to different Examples, which should however not be considered limitative of the invention.

In some of these Examples, use was made of attapulgite under the trade name ATTAGEL 50 obtained from Engelhart Minerals. This attapulgite contains 68% $SiO_2$, 12% $Al_2O_3$ and 10.5% MgO.

In the Examples, use was made of soda water glass or sodium silicate solution from Eka Kemi AB. In this case, the ratio of $SiO_2$ to $Na_2O$ was 3.3:1, the $SiO_2$ content being 26.6% and the density 1350 $kg/m^3$.

The aluminium hydroxy chloride used being of the formula $Al_2(OH)_5Cl.3H_2O$ was obtained from Hoechst under the trade name "KLORHYDROL ACH".

EXAMPLE 1

To 10 litre water containing "KLORHYDROL ACH" is added attapulgite in an amount corresponding to 1.81 kg dry attapulgite. The content of "KLORHYDROL ACH" in the slurry corresponds to 15 g $Al_2O_3$ calculated on 100 g dry attapulgite. The attapulgite is added under vigorous agitation. A dry monolith of honeycomb structure is immersed in the slurry and the excess is blown off with compressed air.

The thus obtained monolith is dried in a heating cabinet for 2 hours at 110°C and thereafter calcined for 4 hours at 750°C.

After this treatment, the monolith and the attapulgite coating fixed thereon are impregnated by immersion in acetone, whereupon the excess of acetone is blown off with compressed air, so as to obtain partial drying of the coating, whereas not of the support.

The thus partially dried monolith is thereafter immersed in a solution of 0.488 g $RhCl_3$ and 1.658 g $PtCl_4$ in 200 ml deionized water. The excess of the solution is blown off and the still wet monolith is placed in a $H_2S$ gas stream. Thereafter, drying is effected at 125°C and calcination at 550°C for 2 hours. The resulting monolith is usable as a catalytic exhaust emission control device after it has been enclosed in a suitable casing of e.g. stainless steel sheet.

EXAMPLE 2

A well-dispersed slurry of attapulgite in water and water glass as dispersing agent is prepared. The fibre surfaces of the slurried particles are coated with a 200 Å thick layer of aluminium silicate and are reslurried, whereupon spray drying is effected. Carrier particles of aluminium silicate-coated attapulgite fibres in a three-dimensional network structure are obtained. These carrier particles are thereafter coated with a catalytically active material in the manner described in Example 1. After reslurrying in water, these carrier particles are used for forming a washcoat on a support of honeycomb structure.

EXAMPLE 3

CoS on aluminium-modified sol

To 50 litre silicic acid sol which contains 4.85% $SiO_2$ and has a surface area of 392 $m^2/g$ (corresponding to a particle size of about 7 nm) and a pH of 9.7 and whose surface has been modified with sodium aluminate, such that 25% of the atoms in the surface are aluminium atoms, are added 160 g of an aqueous solution containing 0.256 g $CoCl_2.6H_2O$, and 160 g of an aqueous solution containing 0.272 g $Na_2S.9H_2O$, dropwise and simultaneously under vigorous agitation, the supply rate corresponding to 10 g solution every 27 minutes. The solutions are maintained at a temperature of 25°C. The sol solution is gradually coloured black as the solutions are being added, but no precipitation of CoS occurs. If this sol solution is ultracentrifuged, black sol particles will settle and a clear supernatant be obtained. The sediment will then contain CoS corresponding to the supplied amount of sulphide and cobalt. In the production of a catalytic exhaust emission control device, the sol solution can be used directly for depositing a layer of catalytically active particles on the surface of the catalyst support. Alternatively, the sol solution can be used for depositing in a coating which has a three-dimensional network structure and consists of fibrous or strip-shaped particles, a catalytically active material in a catalytic exhaust emission control device.

EXAMPLE 4

Nickel sulphide on aluminium-modified silicic acid sol

Example 3 is repeated with the exception that 160 g of an aqueous solution containing 0.256 g $NiCl_2.6H_2O$ is added together with the sodium sulphide solution. The sol solution is gradually coloured black as the two solutions are being added, but no precipitation of nickel sulphide occurs. If this sol solution is ultracentrifuged, black sol particles will settle and a clear supernatant be obtained. The sediment contains NiS corresponding to

the supplied amount of sulphide and nickel. The sol solution may however be used either for depositing a coating of the catalytically active sol particles on a monolith of the type described in Example 1 or for depositing catalytically active particles in a coating of a three-dimensional network structure existing on such a monolith. The thus obtained catalyst is usable for a catalytic exhaust emission control device.

EXAMPLE 5

Molybdenum sulphide on aluminium-modified silicic acid sol

To 100 g silicic acid sol which contains 11.5% $SiO_2$ and has a surface area of 476 $m^2/g$ ( corresponding to a particle size of about 7 nm) and a pH of 10 and whose surface has been modified with sodium aluminate, such that 25% of the atoms in the surface are aluminium atoms, is added 45 g of a 0.2 molar $Na_2S.9H_2O$ solution dropwise and under vigorous agitation. The pH is thereafter decreased to 4.3-4.4 by the addition of a 0.5 molar HCl solution under vigorous agitation. 12.8 g of a 5% ammonium molybdate solution, $(NH_4)_6Mo_7O_{24}.4H_2O$, is thereafter added to the sol solution under vigorous agitation, while maintaining the pH constant at 4.3-4.4. The experiment is conducted at room temperature. The sol solution is gradually coloured blackish grey during the addition of the ammonium molybdate solution, but no precipitation of molybdenum sulphide occurs. If the obtained sol solution is ultracentrifuged, a blackish grey sediment settles, in which the molybdenum and sulphide supplied can be quantitatively found.

If this experiment is repeated without the presence of aluminium-modified silicic acid sol, a blackish grey precipitate of molybdenum sulphide will be obtained in the reaction vessel.

The aluminium-modified silicic acid sol of particles with molybdenum sulphide coating is thereafter used for impregnating a coating on a catalyst support, such that

the sol particles with their molybdenum sulphide coating are incorporated in the coating to serve as catalyst material. The resulting catalyst is usable for purifying automotive exhaust gases.

EXAMPLE 6

Molybdenum oxide and cobalt oxide on aluminium oxide

To a solution of 0.2 g $Co(NO_3)_2.6H_2O$ in 100 ml water is added 5 g aluminium oxide sol "PURAL SB" from Condea. This sol contains 3.87% $SiO_2$ and 0.07% $Al_2O_3$, the surface of the sol particles being modified with natrium aluminate, such that 25% of the atoms in the surface are aluminium atoms. The sol has a surface area of 110 $m^2/g$. To the thus prepared solution is added slowly and dropwise under agitation a solution of 0.2 g $(NH_4)_6Mo_7O_{24}.H_2O$ in 100 ml water. During addition, pH is adjusted to 10.5 with ammonium hydroxide. The solution is left under agitation for 1 hour. The temperature is 25°C. Upon centrifuging a faintly pink sediment of aluminium oxide and a clear colourless supernatant are obtained. The supplied amount of cobalt and molybdenum are quantitatively found on the aluminium oxide particles. If the experiment is carried out without any aluminium oxide in the sol, a bluish precipitate is obtained when pH is adjusted to 10.5 with ammonium hydroxide.

The aluminium oxide coated with molybdenum oxide and cobalt oxide is thereafter used for producing a washcoat on a catalyst support of honeycomb structure. The resulting catalyst is usable as a catalytic exhaust emission control device.

EXAMPLE 7

Platinum on silicic acid sol

A first solution is prepared by adding 2 ml hydrazine hydrate under agitation to a silicic acid sol which contains 3.94% $SiO_2$ and has a surface area of 100 $m^2/g$. 4.5 ml of an $H_2PtCl_6$ solution which contains 30 g Pt/l and has been acidified with HCl so as to be 5.8 molar with respect to HCl, is diluted with 20.5 ml water. The

thus obtained second solution is added to the first solution at a supply rate of 0.37 ml/min dropwise and under agitation. During the addition of the second solution to the first solution, an ammonium hydroxide solution is also supplied dropwise, such that pH never falls below 4.3. The resulting solution is slowly heated to 50°C. Upon reduction to metallic platinum, the solution is coloured black, but no separate precipitation of platinum occurs. If the reduction is carried out in the absence of silicic acid sol, a black precipitate is formed. After completed reduction in the presence of sol, the sample is centrifuged. A black sediment and a clear colourless supernatant are then obtained. The amount of platinum supplied is quantitatively found in the sediment. The silicic acid sol particles coated with platinum may be used in the form of a sol for coating the surface of a coating which is applied to a catalyst support and has a three-dimensional network structure and consists of fibrous or strip-shaped particles of attapulgite. The thus obtained catalyst is usable for catalytic exhaust emission control of car exhaust gases.

EXAMPLE 8

Platinum on aluminium silicate sol

Example 7 is repeated but the first solution now instead is a solution of 2 ml hydrazine hydrate in 25 g silicic acid sol whose surface has been modified with sodium aluminate, such that 25% of the atoms are aluminium atoms, this silicic acid sol containing 3.87% $SiO_2$ and having a surface area of 110 $m^2/g$ (corresponding to a particle size of about 22 nm). If this sol is thereafter centrifuged, a black-brown sediment and a clear colourless supernatant are obtained, the amount of platinum supplied being quantitatively found in the sediment. However, the sol is used for impregnating a coating which consists of attapulgite fibres and has a three-dimensional network structure and is applied as washcoat to a catalyst support. The thus obtained product is usable as a catalytic exhaust emission control device.

EXAMPLE 9

In order to achieve a maximum saving of precious metal in the ceramic body of a catalytic exhaust emission control device, it can be prepared in the manner described below. As compared with a commercial catalyst, a considerably smaller amount of precious metal, preferably Pt and Rh, need be used, the coating being effected in such a manner that the washcoat alone is impregnated and such that substantially no catalytically active material will be in the carrier support of e.g. cordierite. Impregnation is so effected that a concentration gradient is obtained, maximum concentration of catalytically active material being had at the surface and a very small content near the surface of the cordierite support.

The production of the catalytic exhaust emission control device is carried out in the following steps:

1) Mix 15.0 ml $ReCl_3$ solution, e.g. 330 g/l, consisting of e.g. 65% $Al_2O_3$, 23% $CeO_2$, 10% $Nd_2O_3$ and 2% $Pr_6O_4$, with 85 ml deionized water.
2) Admix to the resultant solution 50 g $\gamma$-$Al_2O_3$ powder under constant agitation for 10 min.
3) Evaporate material to dryness under agitation and dry in furnace at 120°C for 16 hours.
4) Crush material to powder.
5) Calcine powder at 550°C for 2 hours.
6) Impregnate the deionized powder according to step 5 with an aqueous solution of 10.0 g $NiCl_2$ in exactly sufficient amount for complete saturation of the powder.
7) Dry at 125°C and calcine at 650°C for 2 hours.
8) Add deionized water to a dry content of 46% or to 68 cP.
9) Grind material in ball mill for 19 hours.
10) Immerse a number of specimens consisting of e.g. cordierite of the make CORNING, in the particle

suspension or washcoat suspension prepared as described above. The excess is blown off with compressed air, and the specimens are calcined at 500°C for 2 hours.

One example of gradient coating of precious metal is carried out in the following way:

11) 0.488 g $RhCl_3$ and 1.658 g $PtCl_4$ are dissolved in 200 ml deionized water.

12) A specimen according to step 10 above is immersed in acetone, the excess is blown off, whereupon the specimen is immersed in the precious metal solution according to step 11 above. The excess is blown off and the still wet specimen is placed in a $H_2S$ gas stream.

13) The specimen according to step 12 above is dried at 125°C and calcined at 550°C for 2 hours.

14) Another specimen of the same cordierite material is immersed in methanol, whereupon the treatment according to steps 12 and 13 above is carried out.

15) Yet another specimen is immersed in 2% $H_3PO_4$, whereupon the treatment according to steps 12 and 13 above is carried out.

16) A further specimen is immersed in water saturated with $H_2S$ and the excess is blown off, whereupon the specimen is immersed in the precious metal solution according to step 11 above.

17) The specimen according to step 16 above is dried at 125°C and calcined at 550°C for 2 hours.

Fig. 1, on a large scale, illustrates a section of a support of honeycomb structure and a slip cast washcoat layer (11) on its inner surfaces.

Fig. 2 illustrates a plot with respect to the Pt signal for establishing the Pt distribution in a conventional car exhaust emission control catalyst produced by coating a support of honeycomb structure with a washcoat according to steps 1-10 above and by immersing the thus obtained support, after drying, in the precious

metal salt solution according to step 11 above, with subsequent renewed drying. As appears from the diagram, platinum is present both in the support and in the washcoat, although the platinum content in the support is lower than that in the washcoat.

Fig. 3 illustrates a similar plot for the car exhaust emission control catalyst produced according to step 13 above. It clearly appears from this diagram that the support and the plastic or polymeric material in which the catalyst has been embedded before cutting out the specimen, had the same signal strength, which indicates that the support in this case was substantially free from platinum, whereas the platinum content was high in the washcoat.

Fig. 4 is a more detailed plot showing the platinum distribution in the washcoat in a car exhaust emission control catalyst produced according to step 15 above. It clearly appears from this diagram that the platinum was concentrated in the washcoat and that the platinum concentration increased from the support toward the free surface of the washcoat layer.

As appears from Figs. 2-4, a maximum concentration of catalytically active material will thus be obtained in the washcoat and a very small content, or no content at all, of this material is obtained in the cordierite support. The analyses according to Figs. 2-4 have been carried out with a Scanning Electron Microscope - Electrone Probe Micro-Analyzer, JEOL-35/WDS.

The catalysts according to the invention produced according to this Example have been found excellent as catalytic exhaust emission control devices for purifying car exhaust gases. The catalytic activity of catalysts produced according to steps 13, 15 and 17 above was established by tests and was found to be as follows:

1. Acetone-treated catalyst according to step 13 above

| Gas hourly space velocity (GHSV) | 50000 $h^{-1}$ | 500000 $h^{-1}$ |
|---|---|---|
| A. Oxidation | $CO + O_2$ | $CO + O_2$ |
| Ignition temperature | 250°C | 240°C |
| Conversion ratio at | 400°C:100% | 375°C:85%<br>470°C:85%<br>550°C:88% |
| B. Reduction | CO + NO | CO + NO |
| Ignition temperature | 340°C | 340°C |
| Conversion ratio at | 435°C:93-94%<br>480°C:95% | 480°C:84% |

2. Phosphoric acid-treated catalyst according to step 15 above

| Gas hourly space velocity (GHSV) | 50000 $h^{-1}$ | 500000 $h^{-1}$ |
|---|---|---|
| A. Oxidation | $CO + O_2$ | $CO + O_2$ |
| Ignition temperature | 280°C | 240-250°C |
| Conversion ratio at | 280°C:100% | 375°C:67%<br>470°C:68%<br>580°C:69% |
| B. Reduction | CO + NO | CO + NO |
| Ignition temperature | 360°C | 340°C |
| Conversion ratio at | 435°C:92% | 480°C:70%<br>630°C:70% |

3. Hydrosulphuric acid-treated catalyst according to step 17 above

| Gas hourly space velocity (GHSV) | 50000 $h^{-1}$ | 500000 $h^{-1}$ |
|---|---|---|
| A. Oxidation | $CO + O_2$ | $CO + O_2$ |
| Ignition temperature | 300°C | 240°C |
| Conversion ratio at | 300°C:100% | 370°C:74%<br>440°C:80%<br>580°C:85% |
| B. Reduction | CO + NO | CO + NO |
| Ignition temperature | 360°C | 340°C |
| Conversion ratio at | 435°C:93-94%<br>550°C:93-94% | 480°C:78%<br>630°C:78% |

An analysis of the catalysts according to steps 13, 15 and 17 above showed that the precious metal content was about 0.57 g/l (calculated on solid material) and the density about 0.74 $g/cm^3$.

CLAIMS

1. A catalytic exhaust emission control device comprising a high-temperature resistant support which consists either of separate high-temperature resistant bodies or of a monolithic high-temperature resistant porous body and which on its surfaces contacting the exhaust gases has a coating which contains a catalytically active material, c h a r a c t e r i s e d in that the coating has a surface area of at least 40 $m^2/g$, preferably at least 75 $m^2/g$, and an average pore diameter of at least 100 Å, at least 75% of the surface area being present in pores having a diameter exceeding 100 Å, and consists of high-temperature resistant aggregate particles with a coherent three-dimensional network structure of fibrous or strip-shaped particles and/or consists of solid high-temperature resistant particles of colloidal size or aggregates thereof, and that the catalytically active material is concentrated in said coating.

2. Device as claimed in claim 1, c h a r a c t e r i s e d in that the catalytically active material is deposited as a surface coating on the aggregate particles and/or the particles of colloidal size.

3. Device as claimed in claim 1 or 2, c h a r a c t e r i s e d in that the aggregate particles with a coherent three-dimensional network structure consist of fibres of attapulgite, halloysite, sepiolite or chrysotile or mixtures thereof.

4. Device as claimed in claim 1 or 2, c h a r a c t e r i s e d in that the solid particles of colloidal size consist of aluminium oxide and/or silica.

5. Device as claimed in any one of claims 1-4, c h a r a c t e r i s e d in that the surface coating on the particles consists of at least one precious metal, such as ruthenium metal, platinum metal or palladium

metal, or of potassium metal, nickel oxide, molybdenum sulphide + cobalt sulphide, molybdenum sulphide + nickel sulphide, tungsten sulphide + cobalt sulphide, tungsten sulphide + nickel sulphide or oxides of rare earth metals or of mixtures of such materials.

6. Device as claimed in any one of the preceding claims, in which the coating comprises aggregate particles having a coherent three-dimensional network structure, characterised in that the aggregate particles contain particles of clay and/or zeolite material entrapped in the three-dimensional network structure.

7. A method of making a catalytic exhaust emission control device as claimed in any one of claims 1-6, in which a high-temperature resistant support is formed either of separate high-temperature resistant bodies or of a monolithic high-temperature resistant porous body and is provided with a coating on its surfaces contacting the exhaust gases, said coating containing a catalytically active material, characterised in that the coating is given a surface area of at least 40 $m^2/g$, preferably at least 75 $m^2/g$, and an average pore diameter of at least 100 Å, at least 75% of the surface area being obtained in pores of a diameter of above 100 Å, in that said coating is formed of carrier particles consisting of high-temperature resistant aggregate particles having a coherent three-dimensional network structure of fibrous or strip-shaped particles and/or in that it is formed of solid high-temperature resistant particles of colloidal size or aggregates thereof, and that the catalytically active material is concentrated in said coating.

8. Method as claimed in claim 7, characterised in that the catalytically active material is applied to the carrier particles before the coating is formed therefrom.

9. Method as claimed in claim 7 or 8, characterised in that the catalytically active material

or a precursor thereof is applied to the carrier particles by dissolving a soluble metal compound in a liquid-borne sol or suspension which is made up of the carrier particles and in which the carrier particles have a surface area accessible to the liquid of at least 1 $m^2/g$, preferably 50-1000 $m^2/g$, and precipitating it therefrom as metal or a sparingly soluble metal compound on the surface of the carrier particles.

10. Method as claimed in claim 9, characterised in that the soluble metal compound which is dissolved in the sol or suspension consists of one component (anionic or cationic) of a sparingly soluble metal compound and is supplied to the sol or suspension in a deficient amount in relation to the capacity of the carrier particles for surface chemical adsorption or attraction of the dissolved component under prevailing conditions, and that the complementary component of the sparingly soluble metal compound is supplied at such a low supply rate that the sparingly soluble metal compound being precipitated upon said supply will have time to diffuse up to the surface of the carrier particles and be deposited thereon without excess of the limit of solubility of the sparingly soluble metal compound in the liquid phase of the sol or suspension and without any spontaneous formation of crystal nuclei of the sparingly soluble metal compound therein, and that for obtaining a surface coating of the metal on the surface of the carrier particles, the metal is first precipitated as a reducible sparingly soluble metal compound which is thereafter reduced to metal, optionally after previous drying of the sol or suspension particles.

11. Method as claimed in claim 7 or 8, characterised in that the carrier particles are coated with the catalytically active material by a microemulsion technique in which an aqueous solution of the catalytically active material or a precursor thereof is emulsified in a water-immiscible liquid and converted therein to

the solid state to form a microsuspension from which the catalytically active material or a precursor thereof is deposited on the carrier particles before these are formed into a coating on the surfaces of the support.

12. Method as claimed in any one of claims 7-11, c h a r a c t e r i s e d in that the catalytically active material or a precursor thereof is deposited on the high-temperature resistant solid colloidal particles and that these particles are thereafter deposited on the high-temperature resistant aggregate particles with a coherent three-dimensional network structure before the coating is applied to the support.

13. Method as claimed in claim 7 or 8, c h a r a c - t e r i s e d in that the catalytically active material is deposited on the coating by first wetting the support and the coating with a vaporable liquid which is thereafter vaporized off the coating but is allowed to remain in the support, whereupon the coating is impregnated with a liquid containing the catalytically active material or a precursor thereof.

Fig.1

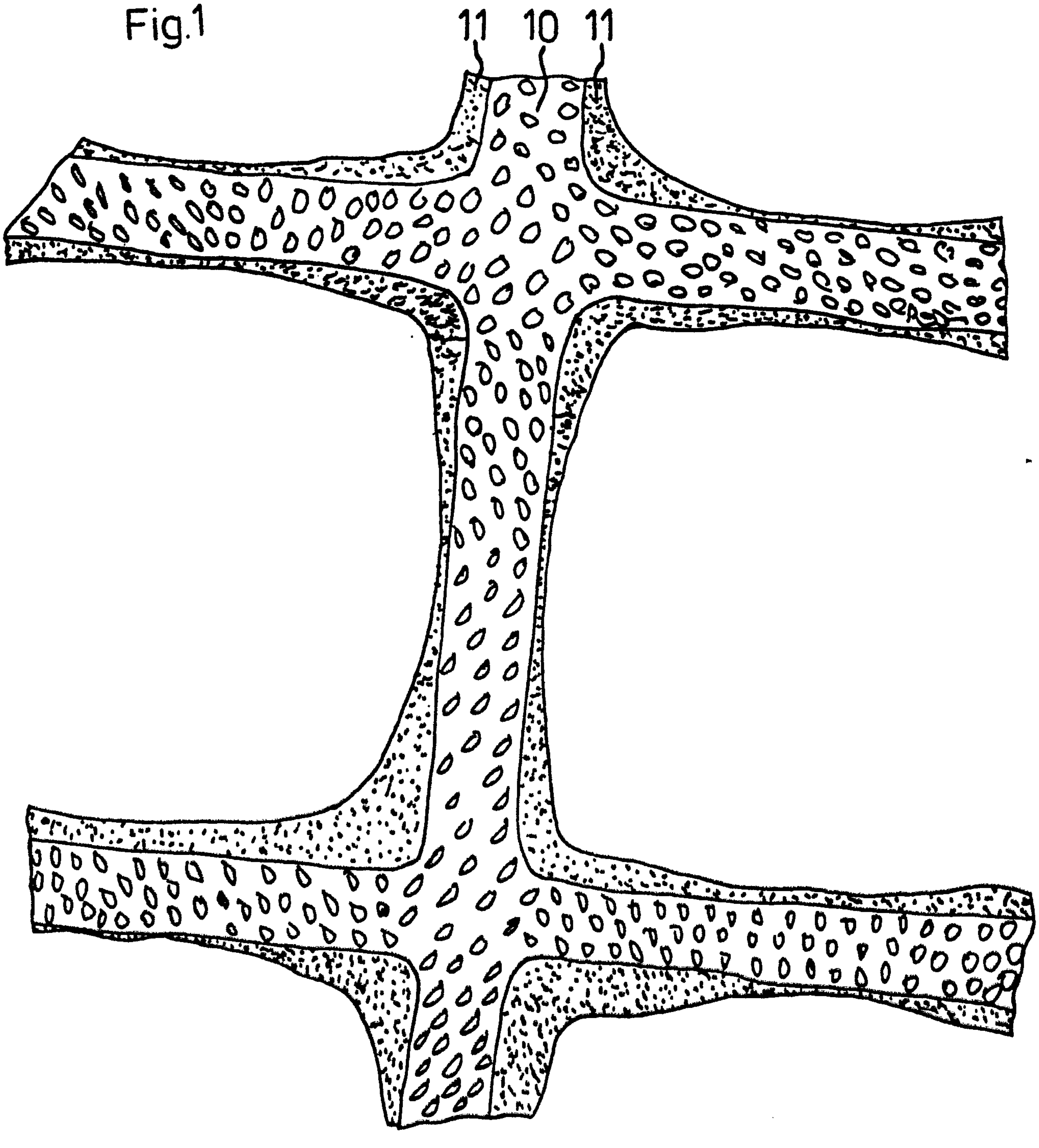

Fig.2

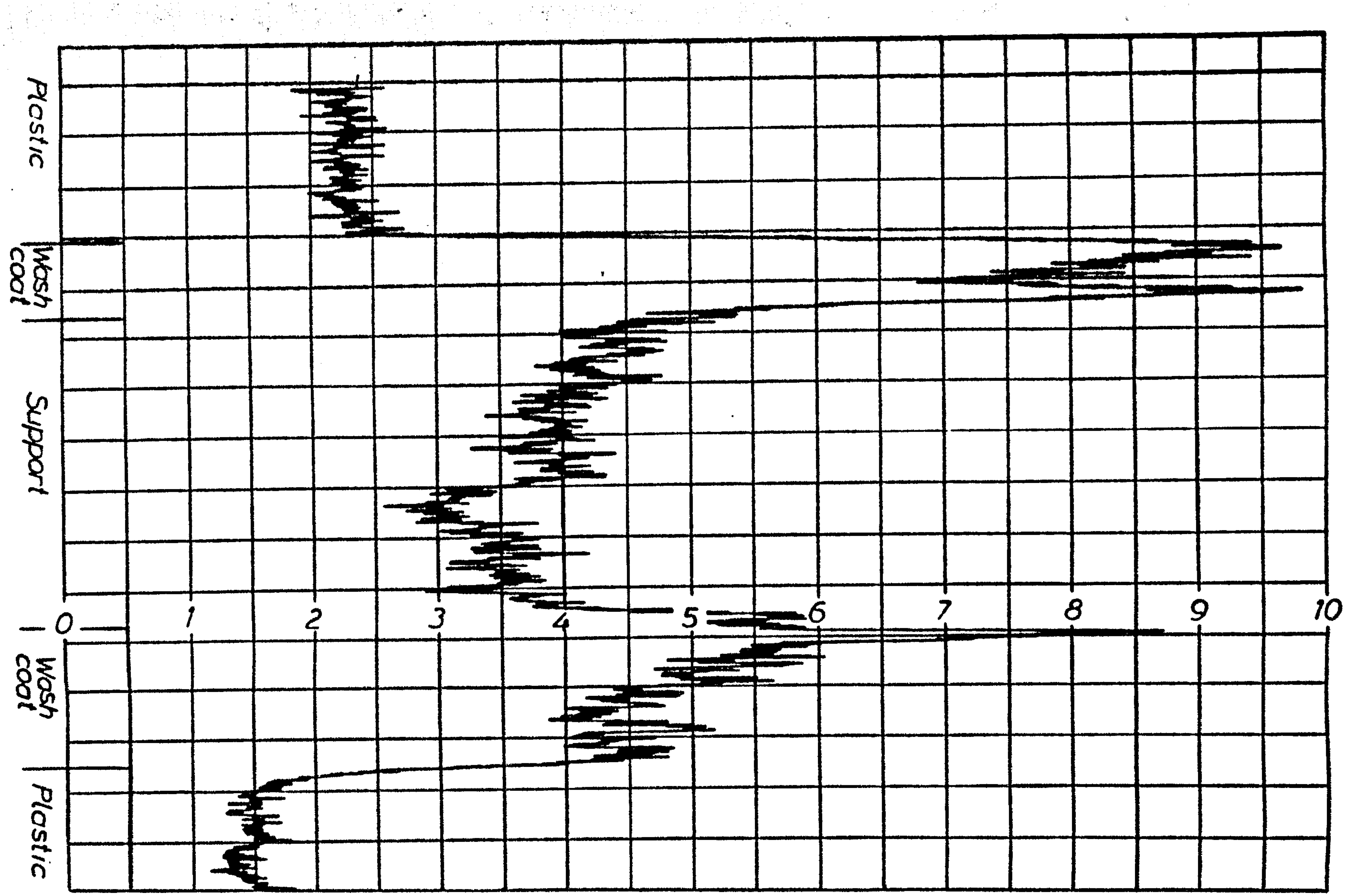


Analysis of commercial car exhaust emission catalyst
Pt signal. SEM-EPMA, JEOL-35/WDS.
Cross-section of wall showing relative Pt content.

2/4

0153911

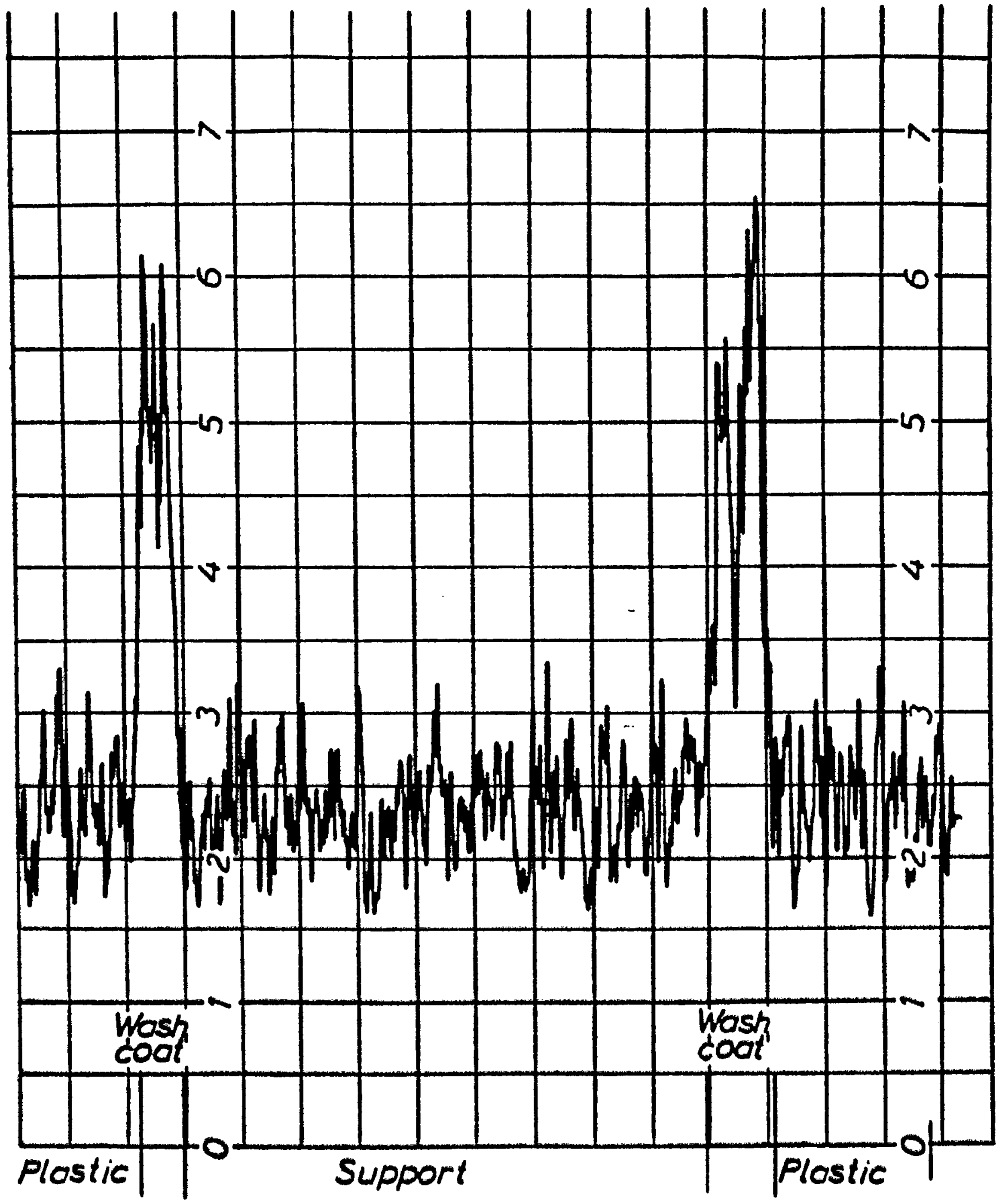


Analysis of car exhaust emission catalyst according to Example 9
Pt signal. SEM-EPMA, JEOL-35/WDS.
Cross-section of wall showing relative Pt content

Fig.3

Fig.4

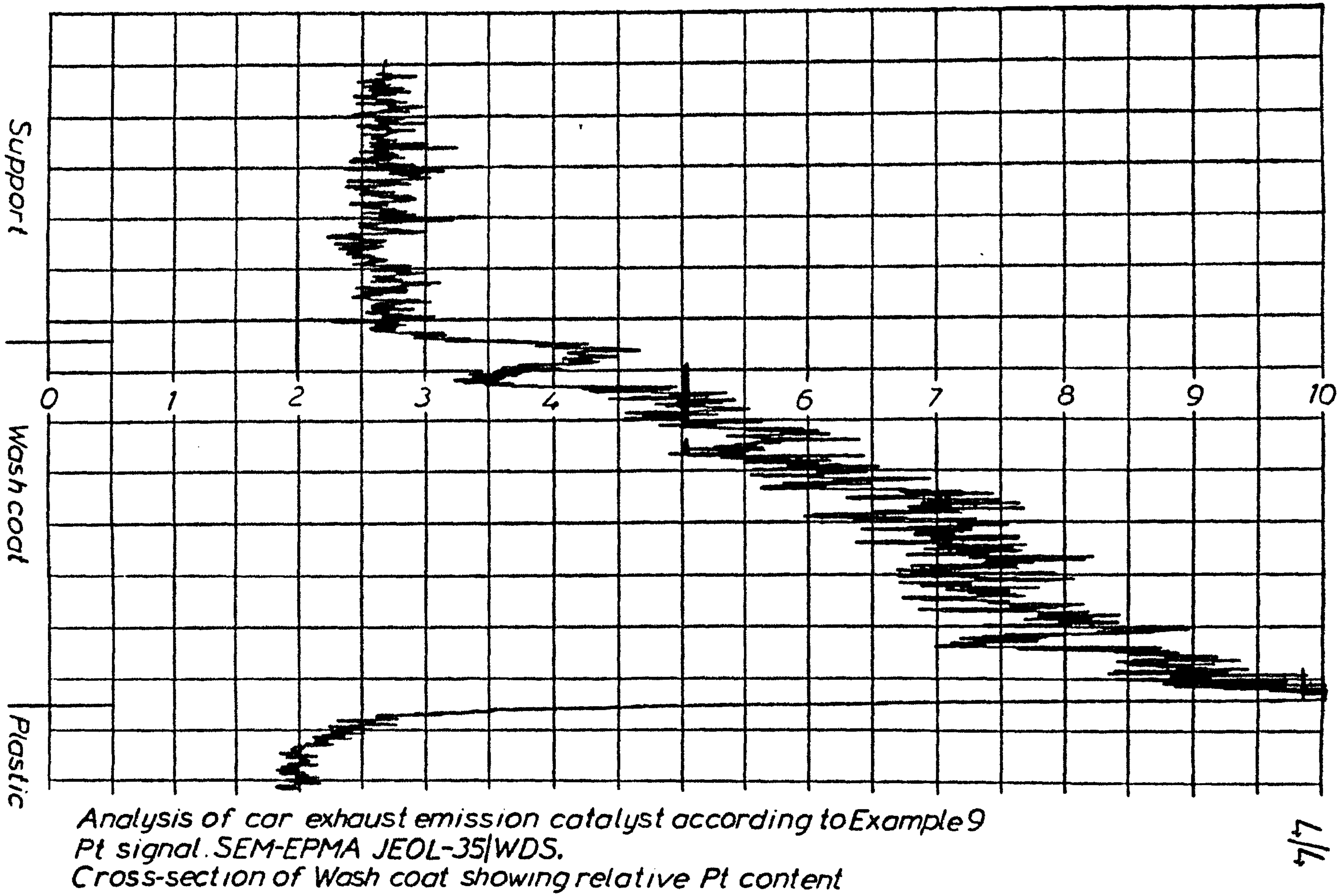


Analysis of car exhaust emission catalyst according to Example 9
Pt signal. SEM-EPMA JEOL-35|WDS.
Cross-section of Wash coat showing relative Pt content

European Patent Office

# EUROPEAN SEARCH REPORT

0153911

Application number

EP 85 85 0028.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | SE-B- 6912751-2 (STAMICARBON NV)<br>*Claim 1*<br>----- | 1-13 | B 01 J 35/00<br>B 01 J 37/02<br>B 01 D 53/36 |
| X | SE-B-345 393 (STAMICARBON NV)<br>*Claims 1-6*<br>----- | 1-13 | |
| X | WO-A-81/02 688 (YTKEMISKA INST.)<br>*Claims 1-11*<br>----- | 1-13 | |
| X | DE-B-1 958 952 (STAMICARBON)<br>*Claims 1-10*<br>----- | 1-13 | |
| X | DE-B-1 963 827 (STAMICARBON)<br>*Claims 1-3*<br>----- | 1-13 | |
| X | DE-A-3 020 630 (BRIDGESTONE TIRE CO LTD)<br>*Claims 1-7*<br>----- | 1-13 | TECHNICAL FIELDS SEARCHED (Int. Cl.4)<br>B 01 D<br>B 01 J |
| A | SE-B-7310110-7 (HOECHST AG)<br>----- | | |
| A | SE-B-7204618-8 (SNAM PROGETTI SPA)<br>----- | | |
| A | DE-B-2 530 759 (RUHRCHEMIE AG)<br>----- | | |
| A | DE-A-2 219 736 (NIPPON OIL)<br>----- | | |
| A | DE-A-1 912 012 (GIRDLER-SÜDCHEMIE-KATALYSATOR GMBH)<br>-/- | | |

The present search report has been drawn up for all claims

| Place of search | Date of completion of the search | Examiner |
|---|---|---|
| STOCKHOLM | 24-04-1985 | STENROOS B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

0153911

# EUROPEAN SEARCH REPORT

Application number
EP 85 85 0028.3



## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | EP-A-15 801 (RHONE POULENC IND) | | |
| A | DE-C-3 003 361 (UOP INC) | | |
| A | DE-B-1 542 185 (W R GRACE & CO) | | |
| Y | GB-B-1 485 370 (UNITED KINGDOM ATOMIC ENERGY AUTHORITY) | 1-13 | |
| Y | GB-A-2 090 766 (CHEVRON RESEARCH CO) | 1-13 | |
| Y | US-A-4 421 699 (NIPPON, SOKEN) | 1-13 | |
| E | EP-A-123 293 (E I DU PONT DE NEMOURS AND COMP.) | 1-13 | TECHNICAL FIELDS SEARCHED (Int. Cl.4) |
| E | SE-B-8205919-7 (EKA AB) | 1-13 | |

The present search report has been drawn up for all claims

| Place of search | Date of completion of the search | Examiner |
|---|---|---|
| STOCKHOLM | 25-04-1985 | STENROOS B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document